# FASCICULE DE BREVET EUROPEEN

(11) **EP 1 250 367 B1**
(45) Date de publication et mention de la délivrance du brevet: **12.04.2006**
(21) Numéro de dépôt: 00991294.0
(22) Date de dépôt: 29.12.2000
(51) Int. Cl.: C08G 18/02, C08G 18/09, C08G 18/22

(54) **PROCEDE DE POLYCONDENSATION D'ISOCYANATES**
VERFAHREN ZUR POLYKONDENSATION VON ISOCYANATEN
CONDENSATION POLYMERISATION METHOD FOR ISOCYANATES

(30) Priorité: 29.12.1999 FR 9916687
(43) Date de publication de la demande: 23.10.2002
(73) Titulaire: RHODIA CHIMIE, 92512 Boulogne Billancourt Cedex (FR)
(72) Inventeur: DALLEMER, Frédéric, F-69003 Lyon (FR); BERNARD, Jean-Marie, F-69440 Mornant (FR); REVELANT, Denis, F-69740 Genas (FR); LEISING, Frédéric, F-60300 Avilly Saint-Léonard (FR)
(74) Mandataire: Colombet, Alain André
(86) Numéro de dépôt international: PCT/FR2000/003757
(87) Numéro de publication internationale: WO 2001/049766

(56) Documents cités:
- FR-A- 2 770 533
- GB-A- 1 386 399
- US-A- 3 736 298
- SHEN Q. ET AL.: "The Active Species for Polymerization of Phenyl Isocyanate by (Diisopropylamido)bis(methylcyclopentadien yl)lanthanides" ORGANOMETALLICS, vol. 16, pages 3711-3714, XP002102537
- INOUE S. ET AL.: "Lanthanoid isopropoxide as novel intiators for anionic polymerization of isocyanates" MACROMOLECULAR RAPID COMMUNICATIONS, vol. 17, 1996, pages 1-7, XP002147381 cité dans la demande

## Description

L'invention concerne un nouveau catalyseur pour la polycondensation de diisocyanates, notamment la (cyclo)trimérisation de diisocyanates.

Un grand nombre de catalyseurs sont utilisés pour la polycondensation de diisocyanates pour produire majoritairement des composés trimères à motif isocyanurate, et/ou biuret et/ou allophanate.

On peut citer les catalyseurs de type basiques tels que les amines tertiaires décrits dans DE 951 168, les dérivés des métaux alcalins ou alcalino-terreux tels qu'hydroxyde, carbamate, alcoolate, etc décrits dans FR 1 190 065, les hydroxydes d'ammonium quaternaire décrits dans FR 1 204 697, FR 1 566 256, EP 3765 et EP 10589, les catalyseurs à groupement éthylène-imine décrits dans FR 1 401 513 et FR 2 230 642, les bases de Mannich en général obtenues à partir de phénol, d'aldéhyde et d'amine secondaire décrits dans FR 2 290 459 et FR 2 332 274, les phosphines décrites dans FR 1 510 342, FR 2 023 423 et DE 19 347 63 et les dérivés aminosylilés tels que les monoaminosilanes, les diaminosilanes, les silylurées et les silazanes décrits dans EP 57653.

Ces catalyseurs permettent généralement d'obtenir un produit de polycondensation présentant un taux satisfaisant en trimères.

US 3,736,298 décrit un procédé de trimérisation de polyisocyanates mettant en oeuvre un alcoolate double de métaux choisis parmi les métaux de transition des groupes III-A, IV-A et V-A, les métaux alcalins et les métaux alcalino-terreux, plus particulièrement un complexe d'un métal alcalin ou alcalino-terreux d'un alcoolate de métal polyvalent.

Le catalyseur est ajouté à température ambiante (10-40°C) au milieu réactionnel contenant les composés isocyanates et provoque une brutale exothermie autogène qui n'est pas contrôlable. La température peut ainsi atteindre voire dépasser les 200°C. Le produit obtenu à l'issue de la réaction est un composé polyisocyanurate qui n'est pas clairement défini. Par ailleurs, compte tenu de l'exothermie dégagée et du caractère autocatalytique de la réaction, il est difficile de développer un tel procédé à l'échelle industrielle. La maîtrise du procédé est un paramètre essentiel dans la mesure où elle permet de garantir de manière reproductible une composition bien définie et des propriétés ciblées telles que des produits de viscosité contrôlée, en particulier des produits de très basse viscosité.

GB 1 386 399 décrit un procédé de préparation de polymères isocyanurates par réaction de l'isophorone diisocyanate et d'une quantité catalytique de phénolate de métal alcalin.

Par ailleurs, H. Sugimoto et S. lnoué décrivent dans Macromol. Rapid Commun., 17, n° 1, January 1996, p 1-7 l'utilisation d'isopropylate de lanthane et d'autres lanthanides comme initiateur de polymérisation anionique de l'hexylisocyanate pour obtenir du poly(hexyl isocyanate) à très haut poids moléculaire. La réaction est conduite à des températures basses (- 78°C). Le document mentionne également qu'à température ambiante, le trimère cyclique est le seul produit de réaction.

En outre, il est indiqué que la polymérisation d'isocyanates porteurs de groupes alkyles secondaires et tertiaires n'a pas lieu.

Ikeda et al (Pure Applied Chem. A 3410), pp 1907-1920 (1997) décrivent également la polymérisation de monoisocyanates à température ambiante au moyen d'alcoolates de lanthanides.

Ils rapportent que lorsque du n-hexyl isocyanate est mis à réagir avec de l'isopropylate d'yttrium à température ambiante, il est obtenu un produit de viscosité élevée qui se solidifie au bout de 10 minutes.

Après une heure, lorsque de l'acide chlorhydrique en solution méthanolique est ajouté au mélange de polymérisation à température ambiante, une poudre blanche précipite.

Par addition d'une solution chlorhydrique de cette poudre blanche dans du méthanol, on obtient un polymère fibreux d'un poids moléculaire de 59 000, qui se révèle par analyse infra-rouge posséder la structure du nylon-1.

En revanche, avec le triisopropylate de lanthane, le n-héxylisocyanate conduit à température ambiante à du trimère cyclique, comme seul produit de réaction.

On a maintenant trouvé de façon surprenante qu'en présence d'alcoolates de terres rares, les isocyanates possédant au moins deux fonctions isocyanates conduisent de manière reproductible, sous certaines conditions de contrôle de la réaction, à un produit de (cyclo)condensation composé principalement de trimère vrai, à savoir le produit de cyclotrimérisation de l'isocyanate comportant un cycle isocyanurate unique, et ceci pour un taux de transformation élevé du monomère isocyanate de départ.

En fonction de la terre rare utilisée, on peut obtenir à côté des formes isocyanurates des dérivés de type biuret et/ou imino-oxadiazinetrione.

L'invention a pour objet un procédé de (cyclo)trimérisation d'isocyanates ayant au moins deux fonctions isocyanates, caractérisé en ce que :
a) l'on fait réagir des monomères isocyanates de départ ayant au moins deux fonctions isocyanates, éventuellement en présence d'autres monomères réactifs avec les monomères isocyanates ayant au moins deux fonctions isocyanates, à une température d'au moins 20°C, avantageusement d'au moins 50°C, et inférieure à 200°C, avantageusement inférieure à 150°C en présence d'un composé comprenant au moins un ligand comportant une fonction alcoolate de terres rares,
b) l'on arrête la réaction par inactivation du catalyseur, notamment par addition d'un composé choisi parmi un acide fort et un peroxyde et leurs mélanges à un taux de transformation des fonctions NCO présentes dans le milieu réactionnel d'au moins 2,5 %, avantageusement 5 %, de préférence 6 % et d'au plus 80 %, avantageusement 70 % ; et éventuellement
c) l'on distille le milieu réactionnel pour éliminer les monomères n'ayant pas réagi.

Avantageusement, le composé comprenant au moins un ligand comportant une fonction alcoolate de terres rares est au sens de l'invention un alcoolate de terres rares. Les autres ligands peuvent comporter d'autres fonctions telles que par exemple des acétylacétonates.

Pour la définition des éléments des terres rares, on se reportera au tableau de la page B.208 de "Handbook of Chemistry and Physics", Editor Robert C. Weast, 67^{th} Ed.).

Ceux-ci comprennent les éléments suivants : scandium, yttrium, lanthane ainsi que les lanthanides (cerium, praséodyme, néodyme, samarium, europium, gadolinium, terbium, ytterbium et lutécium).

Selon l'invention, il est possible d'ajouter un composé comprenant une fonction alcoolate de terre rare ou un mélange de composés.

La fonction alcoolate de terres rares peut consister en toute fonction obtenue par substitution d'un groupe OH alcoolique par un métal de terres rares.

On peut citer en particulier les propylates, notamment les isopropylates, en particulier l'isopropylate des éléments de terres rares suivants : Y, Sm, Yb et La.

Conviennent également de façon satisfaisante les méthylates, éthylates et butylates des éléments précités.

Par ailleurs, on a obtenu de très bons résultats avec des composés comportant au moins une fonction alcoolate de terres rares et un groupe polyalkénylènoxyde, notamment polyéthylènoxyde ou polypropylènoxyde.

On préfère les alcoolates de polyalkylène glycol dont le nombre de motif oxyde d'alkylène n'est pas supérieur à 20, de préférence pas supérieur à 10 et avantageusement pas supérieur à 5.

Les groupes alcoolates peuvent être également être portés par des molécules porteuses de plusieurs fonctions alcoolates sur la même molécule. A titre d'exemple, on peut citer les composés possédant deux fonctions alcools tels les les glycols, les butane-diols, les glycols ramifiés tels que le propylène glycol, les triols telles que le glycérol ou le triméthyolpropane.

Les ligands comportant une fonction alcoolate de terres rares peuvent être identiques ou différents.

On peut aussi utiliser un mélange d'alcoolates issus de deux ou plusieurs terres rares ou un mélange d'alcoolates métalliques dont au moins un est un alcoolate de terre rare. Les ligands de ces mélanges alcoolates peuvent être identiques ou différents.

Le procédé selon l'invention peut être utilisé pour la cyclotrimérisation de tout type d'isocyanates, ou mélange d'isocyanates tels que définis précédemment qu'ils soient aliphatiques, cycloaliphatiques ou aromatiques, y compris les prépolymères ayant des groupes isocyanates terminaux, notamment ceux décrits dans US 5,115,071 dont le contenu est incorporé par référence dans la présente demande. Il peut ainsi être utilisé pour la trimérisation d'isocyanates en présence de divers diols, triols et autres polyols dont les poids moléculaires se situent dans une large gamme, y compris les polyols et aminopolyols comprenant des groupes polyéther et polyester, employés pour la production de résines polyuréthanes et polyisocyanurates.

Les diisocyanates sont toutefois préférés.

La présente invention vise la (cyclo)trimérisation de composés porteurs d'au moins deux fonctions isocyanates, désignés dans la présente description par isocyanates monomères.

Il peut s'agir de monomères isocyanates à squelette hydrocarboné exclusivement de nature aliphatique, linéaire, ramifiés ou cycliques ou d'isocyanates aromatiques.

On peut citer en particulier comme monomère aliphatique linéaire l'hexaméthylènediisocyanate (HDI).

On peut citer également les monomères aliphatiques dont le squelette hydrocarboné est ramifié mais dont les fonctions isocyanates sont portées par des atomes de carbone primaire, par exemple le 2-méthyl pentane diisocyanate.

On peut encore citer les monomères dont au moins une fonction isocyanate est en position cycloaliphatique, secondaire, tertiaire ou néopentylique.

Ainsi, parmi ces produits, ceux qui donnent d'excellents résultats avec les catalyseurs de l'invention, à la différence d'autres catalyseurs avec lesquels ils n'ont qu'un taux de transformation médiocre, sont les monomères dans lesquels la fonction isocyanate est portée par un atome de carbone cycloaliphatique, secondaire, tertiaire ou néopentylique, en particulier les isocyanates cycloaliphatiques. Ces monomères sont tels qu'au moins deux fonctions isocyanates sont distantes du cycle le plus proche d'au plus un carbone et, de préférence, sont reliées directement à lui. En outre, ces monomères cycloaliphatiques présentent avantageusement au moins deux fonctions isocyanates portées par des atomes de carbone secondaires, tertiaires ou néopentyliques.

De manière surprenante, on obtient de bons résultats pour des isocyanates dans lesquels la liberté conformationnelle du carbone portant la fonction NCO est faible. On peut citer à titre d'exemple les monomères suivants :
- les composés correspondant à l'hydrogénation du ou des noyaux aromatiques porteurs des fonctions isocyanates de monomères d'isocyanates aromatiques et notamment du TDI (toluènediisocyanate) et des diisocyanato-biphényles, le composé connu sous le sigle H₁₂MDI (4,4' bis-(isocyanato cyclohexyl) méthane), les divers BIC [Bis(isocyanato-méthylcyclohexane)] et les cyclohexyldiisocyanates éventuellement substitués ;
   et surtout
- le norbornanediisocyanate, souvent désigné par son sigle NBDI ;
- l'isophoronedüsocyanate, ou IPDI, ou plus précisément 3-isocyanatométhyl-3,5,5-triméthylcyclo-hexylisocyanate.

Comme monomères aromatiques, on peut citer les :
- 2,4- ou 2,6- toluène diisocyanate (TDI) ;
- 2,6-4,4'-diphénylméthane diisocyanate (MDI) ;
- 1,5-naphtalène diisocyanate (NDI);
- tolidine diisocyanate (TODI) ;
- p-phénylène diisocyanate (PPDI).

On peut aussi citer les composés isocyanates comportant plus de deux fonctions isocyanates, à titre d'exemple on peut citer le 4-isocyanatométhyl-octaméthylène-diisocyanate encore connu sous l'abréviation de TTI ou NTI , l'ester du 2-isocyanatoéthyl-diisocyanate de lysine encore connu sous le terme de LTI.

Les monomères de départ peuvent également être des produits d'oligomérisation d'isocyanates de plus faible masse moléculaire, ces produits d'oligomérisation étant porteurs de fonctions isocyanates. Dans ce cas, il n'est pas nécessaire de séparer l'oligomère non transformé du produit réactionnel formé à l'issue de la réaction de trimérisation.

On peut aussi utiliser dans la réaction de cyclotrimérisation des mélanges de ces isocyanates pour obtenir des composés isocyanurates mixtes ou des mélanges d'isocyanurates.

Dans ce cas particulier des mélanges d'isocyanates, on peut utiliser pour partie des molécules ne possédant qu'une seule fonction isocyanate . Dans ce demier cas, la quantité de fonctions isocyanates apportées par ce composé monomère ne peut représenter plus de 50% en nombre du total des fonctions isocyanates de l'ensemble des composés à fonctions isocyanates. Ce composé monomère à une seule fonction isocyanate peut comporter éventuellement des fonctions utiles à l'application finale de la composition telles que des fonctions polysiloxanes, des fonctions polyéthers, des fonctions perfluorées, des fonctions alkoxysilanes ...

Le catalyseur ou le mélange de catalyseurs est ajouté au milieu réactionnel sous agitation, de préférence en l'absence de solvant ou dans un solvant, de préférence inerte, vis-à-vis des isocyanates du milieu réactionnel. Dans le cas où le solvant est réactif vis-à-vis des isocyanates, on ajuste la concentration du catalyseur de telle manière que la quantité de solvant ne soit pas préjudiciable à l'obtention du composé de l'application visée.

Le solvant est de préférence choisi de façon à ce que son point d'ébullition soit supérieur à la température de réaction. On peut citer les hydrocarbures aliphatiques tels que l'hexane ou aromatiques tels que le toluène, ou encore les alcools, notamment l'éthanol, le propanol ou l'isopropanol.

On peut toutefois travailler sous pression avec des solvants ou des gaz à l'état supercritique. Toutefois, on préfère travailler sous atmosphère neutre.

Le ratio molaire quantité de catalyseur/quantité de fonctions isocyanates (NCO) est avantageusement d'au moins 5.10⁻⁵ et d'au plus 5.10⁻² de préférence compris entre 10⁻⁴ et 10⁻². La quantité retenue sera fonction de la structure de l'isocyanate de départ et plus particulièrement de l'encombrement des fonctions isocyanates. En général, plus la fonction isocyanate est encombrée, plus la réactivité de l'isocyanate diminue et par voie de conséquence plus la quantité de catalyseur utilisée sera plus élevée.

Lorsque les gaz dissous dans les isocyanates monomères de départ sont éliminés, la quantité de catalyseur peut être réduite.

En outre, lorsque l'on élimine les gaz dissous dans les isocyanates monomères de départ, la réactivité des catalyseurs est améliorée.

Les gaz dissous (CO₂, gaz halogénés, O₂...) peuvent être éliminés par tout moyen connu, notamment par barbotage d'un gaz inerte tel que l'azote ou l'argon, ou par mise sous vide du milieu réactionnel.

On laisse la réaction se dérouler pendant une durée variant entre 30 minutes et 7 heures, de préférence entre 1 heure et 5 heures.

La réaction de polycondensation est stoppée au taux de transformation souhaité des fonctions isocyanate.

Pour arrêter la réaction de (cyclo)trimérisation, on peut ajouter au milieu réactionnel un composé détruisant l'activité catalytique des fonctions alcoolates de terres rares, ou leurs formes dérivées telles qu'elles sont présentes dans le milieu réactionnel, par exemple les formes métalliques complexées à un ligand présent dans le milieu réactionnel. Avantageusement, on ajoute au milieu réactionnel un acide fort ou un peroxyde.

Par "acide fort" au sens de la présente invention, on entend un acide dont le pKa est de 7 au plus. On peut citer en particulier l'acide chlorhydrique, l'acide sulfurique, l'acide paratoluénesulfonique ou l'acide phosphorique et ses mono- ou diester d'alkyle, en particulier l'acide diisopropyl phosphorique, les acides étant éventuellement dilués.

Les peroxydes qui peuvent être employés consistent en tout peroxyde répondant à la définition généralement admise pour ces composés, à savoir un composé oxyde ou anhydride, renfermant plus d'oxygène que l'oxyde normal.

On peut citer le peroxyde d'hydrogène, le peroxyde de diéthyle, le peroxyde de dibutyle, ou le peroxyde de benzoyle.

On peut citer également les peracides, notamment l'acide peracétique et l'acide perbenzoïque ainsi que les percarbonates ou encore, les composés de réaction de l'eau oxygénée avec un isocyanate.

L'acide fort ou le peroxyde est ajouté en une quantité telle qu'elle permette la transformation du composé métallique en un composé non réactif, c'est-à-dire la transformation d'un alcoolate en un alcool et sels d'acide fort.

En général, on utilisera un rapport molaire fonctions acide fort (peroxyde)/fonction base forte ou alcoolate de métal compris entre 0,5 et 30, de 0,8 et 10.

L'addition de ces composés au milieu réactionnel fait en outre disparaître la coloration de celui-ci due à la présence d'un complexe métallique sans avoir d'effet néfaste sur les isocyanates de départ ou les produits de polycondensation obtenus.

On peut également en variante absorber le catalyseur ou ses formes dérivées sur un support minéral, par exemple de la silice, de l'alumine, ou autres oxydes minéraux.

Selon un mode de réalisation de l'invention, la réaction de (cyclo)trimérisation est conduite en présence d'un composé possédant un hétérocycle azoté à cinq chaînons ayant au moins deux atomes d'azote.

On a observé de manière surprenante, qu'en présence d'un composé cyclique azoté possédant au moins deux atomes d'azote, les catalyseurs de l'invention permettaient d'aboutir à un produit réactionnel comprenant à côté des cyclotrimères à groupe isocyanurate des composés polyisocyanates mono-uretdiones encore appelés "dimères vrais" qui sont des molécules issues de la condensation de deux molécules d'isocyanates monomères.

En particulier, un composé azoté cyclique tel que défini ci-dessus permet, lorsqu'il est ajouté à un alcoolate de terres rares en un rapport molaire composé cyclique azoté/alcoolate de terres rares compris entre 0,1 et 10, notamment entre 0,2 et 5, d'obtenir un produit réactionnel comprenant des polyisocyanates monouretdiones et des polyisocyanates monoisocyanurates en un rapport molaire polyisocyanates monouretdiones/polyisocyanates monoisocyanurates supérieur à 0,5, notamment supérieur à 0,6, de préférence supérieur à 0,75, voire supérieur à 1.

L'invention a ainsi pour objet un procédé de préparation d'une composition polyisocyanate comprenant des polyisocyanates trimères, notamment des polyisocyanates monoisocyanurates également désignés trimères vrais et des polyisocyanates dimères, notamment des polyisocyanates monouretdiones également désignés dimères vrais, dans lequel le rapport molaire polyisocyanates dimères vrais/polyisocyanates trimères vrais est supérieur à 0,5, notamment supérieur à 0,6, de préférence supérieure à 0,75 dans laquelle on réalisé une polycondensation d'isocyanates monomères, en présence d'un alcoolate de terres rares et d'un composé azoté consistant en un hétérocyclique à cinq chaînons, possédant au moins deux atomes d'azote, le rapport molaire composé azoté cyclique/alcoolate de terres rares étant compris entre 0,1 et 10, avantageusement entre 0,2 et 5.

L'invention a également pour objet l'utilisation d'un composé possédant un hétérocycle azoté à 5 chaînons ayant au moins deux atomes d'azote pour promouvoir la réaction d'ouverture/fermeture de cycles urétidinediones formés dans un procédé de (cyclo)trimérisation catalytique, de composés isocyanates ayant au moins deux fonctions isocyanates dans lequel le catalyseur de (cyclo)trimérisation, comporte un alcoolate de terres rares.

Dans la présente invention, on désigne par "monouretdiones" ou "dimères vrais" les composés obtenus par condensation de deux molécules d'isocyanates monomères de départ comportant un cycle uretdione unique.

On désigne par "monoisocyanurates" ou "trimères vrais" les composés obtenus par condensation de trois molécules d'isocyanates monomères de départ comportant un cycle uretdione unique.

On désigne par "composés lourds" les composés obtenus par condensation de plus de trois molécules d'isocyanate monomères, notamment les "bis-trimères", les "bis-dimères", les tris-trimères et les "dimères-trimères".

Les bis-trimères sont des molécules polyisocyanates comportant deux cycles isocyanurates, dans lesquels la liaison entre les deux cycles isocyanurates est assurée par une unité monomère à savoir que deux fonctions isocyanates sont engagées dans chacun des cycles isocyanurates.

Les bis-dimères sont des molécules polyisocyanates comportant deux cycles uretidiones, dans lesquels la liaison entre les deux cycles uretidiones est assurée par une unité monomère à savoir que deux fonctions isocyanates sont engagées dans chacun des cycles uretidiones.

Les tris-trimères sont les homologues supérieurs des bis-trimères comportant trois cycles isocyanurates.

Dans le cas où les monomères sont des diisocyanates, des tris-trimères sont obtenus par polycondensation de sept chaînes monomères et comportent trois cycles isocyanurates, deux cycles isocyanurates consécutifs étant reliés par une unité monomère.

Les dimères-trimères sont des homologues supérieurs des composés ci-dessus comportant une fonction isocyanurate et une fonction mono-uretidione.

Le composé pentacyclique azoté à cinq chaînons est avantageusement choisi parmi l'imidazole, le triazole, le tétrazole et leurs dérivés comprenant un ou plusieurs substituants, notamment de 1 à 4 substituants suivant la nature du cycle.

Les substituants peuvent indépendamment l'un de l'autre être choisis parmi OH, SH, un groupe alkyle en C₁-C₄, hydroxyalkyle en C₁-C₄, aminoalkyle en C₁-C₄, alkylamino en C₁-C₄; dialkylamino (chaque groupe alkyle ayant de 1 à 4 atomes de carbone), alkylthio en C₁-C₄, halogénoalkyle en C₁₋C₄, cycloalkyle en C₃-C₈, aryle en C₅-C₁₀, hétérocyclique dont l'hétérocycle comprend de 2 à 10 atomes de carbone et de 1 à 4 hétéroatomes identiques ou différents choisis parmi O, S et N et le groupe NR₄, R₄ étant notamment alkyle en C₁-C₄ ou cycloalkyle en C₃-C₈.

On préfère les composés ayant un noyau imidazole non substitué ou ayant un noyau imidazole portant un substituant N-alkyle, de préférence N-méthyle.

On préfère généralement ajouter au milieu réactionnel le catalyseur et le composé cyclique azoté simultanément dans une solution de solvant.

On peut citer à titre de solvants ceux cités précédemment. On préfère généralement ajouter l'alcoolate de terre rare en même temps que le composé cyclique azoté, en particulier l'imidazole ou le N-méthylimidazole en solution dans un alcool éther par exemple le méthoxyéthanol.

On arrête la réaction au taux de transformation souhaité.

La durée de réaction est dépendante de la structure de l'isocyanate, de la dilution, du taux de catalyseur, du procédé retenu (procédé en batch, procédé continu...) et du taux d'avancement de la réaction désirée. Ce temps variable est en général compris entre quelques minutes et quelques heures, au maximum 24 heures. Les catalyseurs de l'invention permettent un bon contrôle de la réaction et donc un bon contrôle des cinétiques de réaction et des durées de réactions.

A l'issue de la réaction, le produit obtenu comprend majoritairement les composés suivants :
- le trimère de l'isocyanate de départ, notamment le "trimère vrai", à savoir le produit de cyclotrimérisation de trois molécules d'isocyanate de départ, comprenant un cycle isocyanurate ;
- le dimère de l'isocyanate de départ, à savoir le produit de cyclodimérisation de deux molécules d'isocyanate de départ, comprenant un cycle urétidinedione ;
- des carbamates de l'isocyanate de départ avec un alcool présent dans le milieu réactionnel ou provenant de la décomposition de l'alcoolate ;
- des allophanates de l'isocyanate de départ avec un alcool présent dans le milieu réactionnel ou provenant de la décomposition de l'alcoolate ;
- des allophanates, notamment des allophanates vrais, à savoir le produit de réaction théorique de deux moles d'isocyanate sur une mole d'alcool;
   plus précisément, le produit de réaction théorique du carbamate formé par réaction d'une mole d'isocyanate sur une mole d'alcool présent dans le milieu réactionnel, avec une seconde mole de l'isocyanate de départ ;
- des bis-trimères, à savoir le produit de tricondensation de deux moles de trimères vrais tels que définis ci-dessous ;
- des composés oligomères plus lourds comportant seuls ou en mélange des fonctions isocyanurate, carbamate, allophanate uretidine dione, oxadiazirietrione, imino-oxadiazine-dione, notamment des trimères lourds, à savoir les produits de condensation de plus de deux moles de trimères entre eux ou avec un autre composé présent dans le milieu réactionnel ;
- de l'allophanate de trimère, à savoir le produit de condensation d'un trimère à fonction isocyanurate sur un alcool présent dans le milieu réactionnel pour former un carbamate, suivie par la réaction du carbamate ainsi obtenu sur une mole supplémentaire d'un composé à fonction isocyanate ;
- des monomères de départ n'ayant pas réagi.

Il n'est pas obtenu de produit de type nylon ni de produits dérivés résultant de la cyclisation du diisocyanate sur lui-même avec consommation de toutes les fonctions isocyanates présentes.

La présence d'eau dans le milieu peut conduire à la formation de composés possédant des fonctions urées et/ou biurets portées, le cas échéant, par les structures décrites ci-dessus.

Les avantages du procédé consistent essentiellement en la maîtrise et le contrôle de la réaction par le biais de l'utilisation de catalyseurs de terres rares. Les avantages du procédé consistent aussi en ce que l'on peut obtenir une variabilité importante de compositions voulues par l'opérateur pour répondre à des besoins en propriétés particuliers tels que par exemple la basse viscosité, l'amélioration des propriétés mécaniques. On peut ainsi obtenir des compositions contenant un taux élevé de trimères vrais supérieurs à 50% et des compositions contenant des taux élevés de composés uretdiones et isocyanurates quand on utilise en plus de l'alcoolate ou du mélange d'alcoolate de terres rares des composés hétérocycliques azotés et que l'on élimine les monomères n'ayant pas réagi, en particulier pour les isocyanates dans lesquels la fonction isocyanate est portée par un carbone encombré, avantageusement secondaire, de préférence tertiaire et plus particulièrement néopentylique notamment ceux de l'lPDl, avec un taux de transformation élevé de l'isocyanate de départ, de préférence supérieur à 30 %.

Les exemples ci-après sont destinés à illustrer l'invention.

### Exemple 1 :

### Trimérisation de l'IPDI en présence de triisopropylate d'yttrium.

Dans un réacteur tricol de 250 ml, sous courant d'azote, on ajoute 100 g d'IPDI soit 0,45 mole (0,9 mole de fonctions NCO). Le milieu réactionnel est agité à température de 25°C.

La température du milieu réactionnel est montée à 115°C en 40 minutes.

0,5 g d'isopropylate d'yttrium (soit 0,008 mole) est ajouté, soit 0,2 mole d'yttrium métal pour 100 moles de fonctions NCO. La température du milieu réactionnel est maintenue à 115°C environ. Après 40 minutes de réaction, le taux de transformation des fonctions isocyanates est de 38 % et le milieu réactionnel présente une coloration légèrement jaune. On laisse refroidir le milieu réactionnel à 40°C et 1ml de phosphate de diisopropyle est ajouté. On observe alors une diminution de la coloration jaune.

L'analyse du milieu réactionnel avant distillation du monomère IPDI présente la répartition moléculaire suivante obtenue après séparation par chromatographie sur colonne PL GEL 50A / 5 microns à haute performance. L'éluant est le dichlorométhane.

| Espèces | % pondéraux normalisés à 100 |
|---|---|
| IPDI monomère | 69,2 |
| IPDT vrai (1 seul cycle isocyanurate) | 24 |
| Bis trimère (2 cycles isocyanurate) | 5,5 |
| lourds (plus de 2 cycles isocyanurate) | 1.3 |

On note la présence d'allophanate et de carbamate d'isopropyle et d'IPDI dans les différents oligomères.

Le ratio Trimères vrais / Trimères totaux est égal à 77 %.

### Exemples 2 à 8 :

### Trimérisation de l'IPDI

De la même manière que pour l'exemple 1, on procède à la trimérisation de l'IPDI en faisant varier les conditions opératoires : température de réaction, durée de réaction, quantité de catalyseur, ou formulation du catalyseur.

Les conditions opératoires et résultats sont reportés dans le tableau 1 ci après.

| N° essai | Température et temps de réaction | catalyseur/IPDI en % poids | catalyseur métal/fonction NCO en % molaire | TT IPDI (I.R.) en % | TT NCO dosage en % | Trimère vrai/somme des trimères en % |
|---|---|---|---|---|---|---|
| 2 | 80°C/ 2h 30 | 0,3 | 0,125 | 4,5 | 5,27 | 75 |
| 3 | 110-120°C 5H | 0,1 | 0,04 | 4,6 | 5,71 | 81 |
| 4 | 110-120°C 1H | 0,5 | 0,2. | 30,8 | 36 | 77 |
| 5 | 110-120°C 2H30 | 1 | 0,4 | 72,2 % | | 58,5 % |
| 6 | 108=115°C 2H 30 | 0,5 * | 0,2 | 28 | 33,22 | 68 |
| 7 | 110°C 50 min | 0,5 | 0,2 | 27 | 34 | 66,5 |
| 8** | 110°C | 0,5 | 0,2 | - | 21,4 | - |

| | | | | | | |
|---|---|---|---|---|---|---|
| * solution toluénique à 20,96 % de catalyseur ramené en pourcentage du catalyseur métallique. | | | | | | |
| ** le milieu final contient des polyisocyanates à fonctions urée et biuret, vraisemblablement dues à la présence d'eau dans le catalyseur. | | | | | | |

### Exemple 9 :

### Trimérisation de l'IPDI en présence d'isopropylate d'ytterbium

De la même manière que pour l'exemple 1, on procède à la trimérisation de l'IPDI en présence de 0,5% en poids d'isopropylate d'ytterbium soit un ratio molaire catalyseur métalique/fonctions NCO de 1,6.10-3. La température du milieu réactionnel est de 110°C et le temps de réaction est de 50 minutes.

La réaction est arrêtée par addition de 0,5 g de butanone péroxyde.

Le taux de transformation de l'IPDI (dosage par réaction à la dibutylamine) est de 34,5 %.

L'analyse du milieu réactionnel avant distillation du monomère IPDI présente la répartition moléculaire suivante obtenue après séparation par chromatographie sur colonne PL GEL 50A / 5 microns à haute performance. L'éluant est le dichlorométhane.

| Espèces | % pondéraux normalisés à 100 |
|---|---|
| lPDl monomère | 72 ,7 |
| lPDT vrai | 17 |
| Dimère d'lPDl plus allophanate d'lPDl et d'isopropyle | 1,1 |
| Bis trimère (2 cycles isocyanurate) | 7,1 |
| lourds (plus de 2 cycles isocyanurate) | 2 |

Le ratio Trimères vrais / Trimères totaux est égal à 66,5 %.

### Exemple 10 :

### Trimérisation d'un mélange d'HDI et d'IPDI

De la même manière que pour l'exemple 1, on procède à la trimérisation d'un mélange HDI / IPDI (50 / 50) en présence de 0,5 % en poids d'isopropylate de samarium soit un ratio molaire catalyseur métallique/fonctions NCO de 1,5.10⁻³. La température du milieu réactionnel est de 110°C et le temps de réaction est de 2 heures.

La réaction est arrêtée par addition d'acide paratoluène sulfonique (quantité représentant deux fois la quantité molaire de catalyseur).

Le taux de transformation des isocyanates monomères (dosage par réaction à la dibutylamine) est de 21,4 %.

Le milieu réactionnel présente des polyisocyanurates d'IPDI, d'HDI et des composés mixtes IPDI/HDI ainsi que des composés allophanates d'isopropyle et d'IPDI ou d'HDI. On observe en plus la présence de composés à fonctions urée et biuret d'HDI et d'IPDI dus à la présence probable d'eau dans le catalyseur.

### Exemple 11 :

### Etude du blocage de la réaction par divers composés.

On procède à une trimérisation de l'IPDI comme décrit à l'exemple 1 à la différence que la réaction est arrêtée par ajout de divers composés acides ou oxygénés, organiques ou minéraux. On contrôle l'arrêt de la réaction et la coloration après réaction de blocage.

| Agent de blocage acide / Quantité en équivalent molaire par mole de catalyseur utilisé | Arrêt de la réaction | Décoloration |
|---|---|---|
| Acide sulfurique dilué / 3 | Oui / dégagement de CO2 | OUI |
| diisopropyl phosphate / 2 | Oui / apparition d'un précipité | OUI |
| H3PO4 85%/2 | Oui/apparition d'un précipité et de dégagement de CO₂ | OUI |
| Agent de blocage oxygéné/ Quantité en équivalent molaire par mole de catalyseur utilisé | Arrêt de la réaction | Décoloration |
| Butanone péroxyde /5 | Oui /apparition d'un précipité | décoloration instantanée |
| Dibenzoyle péroxyde / 3 | OUI mais blocage lent (5 heures) | lente décoloration (1 nuit) |

| Agent de blocage minéral / Quantité en équivalent molaire par mole de catalyseur utilisé | Arrêt de la réaction | Décoloration |
|---|---|---|
| | | |
| Silice / 100mg | Blocage lent (3 h) | lente décoloration |

### Exemple 12 :

### Synthèse d'une formulation polyisocyanate composée d'IPDT et d'au moins l'allophanate d'IPDI et d'isopropanol.

Dans un réacteur tricol de 250 ml, sous courant d'azote, on ajoute 100 g d'IPDI soit O,45 mole. Le milieu réactionnel est agité à température de 25°C.

La température du milieu réactionnel est montée à 100°C.

2,25 g d'une solution toluénique à 20,96 % de tris isopropylate d'yttrium (soit 0,5% en poids de catalyseur par rapport à l'IPDI engagé) est ajouté.

On observe une légère exothérmie qui fait passer la température à 107°C en 15 minutes.

La température du milieu réactionnel est portée à 120°C puis maintenue à cette température pendant 2 heures.

On baisse la température à 95°C et 2 g d'isopropanol sont ajoutés au milieu réactionnel.

Après une heure, la réaction est arrêtée par addition de 1 g d'acide paratoluène sulfonique.

Le taux de transformation en lPDl est de 28 %.

L'analyse du milieu réactionnel avant distillation du monomère lPDl présente la composition suivante :

| Espèces | % pondéraux normalisés à 100 |
|---|---|
| IPDI monomère | 72 |
| IPDT vrai | 10,8 |
| Dimère d'IPDI plus allophanate d'IPDI et d'isopropyle | 11,6 |
| Bis trimère (2 cycles isocyanurate) Plus bis allophanate d'IPDI et d'isopropyle | 5 |
| Ratio Trimères vrais / total des espèces non compris l'IPDI monomère. | 39,5% |

### Exemple 13 :

### Polycondensation d'IPDI en présence de Tris (2 méthoxy éthylène glycolate) de lanthane

Dans un réacteur tricol de 50ml on ajoute à température ambiante, sous courant d'azote, 20g d'isophorone diisocyanate (lPDl) soit 0,09mole soit 0,18mole de NCO. On ajoute au milieu réactionnel 5 % d'une solution d'alcoolate de Tris (2 méthoxy éthylène glycolate) de lanthane soit 1g, la quantité de catalyseur est de l'ordre de 100mg soit un ratio Métal /NCO de 1,5.10⁻³. La température du milieu réactionnel est portée à 60°C et la réaction laissée sous agitation pendant 5 heures. On arrête la réaction par addition de 200 mg d'acide paratoluène sulfonique. Le taux de transformation en lPDl est de 74,5%.

L'analyse du milieu réactionnel avant distillation du monomère IPDI par chromatographie donne la composition suivante :

| Produit | Pourcentages pondéraux |
|---|---|
| IPDI | 25,5 |
| Carbamate d'IPDI et de 2 méthoxyéthanol | 0 ,5 |
| Allophanate d'IPDI et de 2 méthoxyéthanol | 6,7 |
| Dimère d'IPDI | 0 |
| Trimère vrai d'IPDI | 27 |
| Bis trimère d'IPDI | 20,4 |
| Lourds dont tris trimère | 19,9 |
| Ratio tri vrai sur somme des trimères | 0,40 |

On note la présence de fonctions allophanates sous le massifs des bis trimères et des lourds.

### Exemple 14 :

### Polycondensation d'IPDI en présence de Tris (2 méthoxy éthylène glycolate) d'Yttrium

Dans un réacteur tricol de 50 ml, on ajoute à température ambiante, sous courant d'azote, 20g d'isophorone diisocyanate (IPDI) soit 0,09 mole soit 0,18mole de NCO. On ajoute au milieu réactionnel 5 % d'une solution d'alcoolate de Tris (2 méthoxy éthylène glycolate) de lanthane soit 1g, la quantité de catalyseur est de l'ordre de 160mg. La température du milieu réactionnel est portée à 60°C et la réaction laissée sous agitation pendant 5 heures. On arrête la réaction par addition de 200 mg d'acide paratoluène sulfonique. Le taux de transformation en IPDI est de 38,5 %.

L'analyse du milieu réactionnel avant distillation du monomère lPDl par chromatographie donne la composition suivante :

| Produit | Pourcentages pondéraux |
|---|---|
| IPDI | 61,5 |
| Carbamate d'IPDI et de 2 méthoxyéthanol | |
| Allophanate d'IPDI et de 2 méthoxyéthanol | 9,5 |
| Dimère d'IPDI | 0 |
| Trimère vrai d'IPDI | 11,6 |
| Bis trimère d'IPDI | 12 |
| Lourds dont tris trimère | 5,4 |
| Ratio tri vrai sur somme des trimères | 0,40 |

On note la présence de fonctions allophanates sous le massifs des bis trimères et des lourds.

### Exemple 15 :

### Polycondensation d'IPDI en présence de Tris (isopropylate) de néodyme

Dans un réacteur tricol de 50ml on ajoute à température ambiante, sous courant d'azote, 20 g d'isophorone diisocyanate (IPDI) soit 0,09 mole soit 0,18mole de NCO. On ajoute au milieu réactionnel 1% (soit 200mg soit 6,2 10⁻⁴ mole) d'alcoolate de Tris (isopropylate) de Néodyme soit un ratio métal / NCO de 3,5 10⁻³. La température du milieu réactionnel est portée à 60°C et la réaction laissée sous agitation pendant 5 heures. On arrête la réaction par addition de 200 mg d'acide paratoluène sulfonique. Le taux de transformation en lPDl est de 83,5%.

L'analyse du milieu réactionnel avant distillation du monomère IPDI par chromatographie donne la composition suivante :

| Produit | Pourcentages pondéraux |
|---|---|
| IPDI | 16,5 |
| Carbamate d'IPDI et de 2 méthoxyéthanol | |
| Allophanate d'IPDI et de 2 méthoxyéthanol | 1,2 |
| Dimère d'IPDI | 0 |
| Trimère vrai d'IPDI | 40,2 |
| Bis trimère d'IPDI | 21,3 |
| Lourds dont tris trimère | 12 |
| Ratio tri vrai sur somme des trimères | 0,55 |

On note la présence de fonctions allophanates sous le massifs des bis trimères et des lourds.

### Exemple 16 :

### Polycondensation d'IPDI en présence de Tris (2 méthoxy éthylène glycolate) de lanthane et d'imidazole

### Préparation de la solution de catalyseur :

Dans un premier temps on prépare la solution catalytique :

On introduit dans 100 ml d'une solution à 10 % poids de Tris (2 méthoxy éthylène glycolate) de lanthane dans le 2 méthoxyéthanol (densité 1,01), 1,87 g d'imidazole (0,0275 mole). Le rapport molaire lmidazole / Tris 2méthoxy éthylène glycolate de lanthane est égal à 1.

### Réaction

Dans un réacteur tricol de 50ml on ajoute à température ambiante, sous courant d'azote, 20g d'isophorone diisocyanate (IPDI) soit 0,09mole soit 0,18mole de NCO. 1g de solution catalytique (soit 2,75 10⁻⁴ mole d'Imidazole et 2,75 10⁻⁴ mole de Tris 2méthoxy éthylène glycolate de lanthane) est ajouté au milieu réactionnel. Les quantités d'alcoolate de lanthane et d'imidazole sont respectivement égales à 100mg et 19 mg, soit un ratio Métal /NCO de 1,5 10⁻³. La température du milieu réactionnel est portée à 60°C et la réaction laissée sous agitation pendant 5 heures puis est bloquée par addition d'acide paratoulène sulfonique (200mg). Le taux de transformation de l'IPDI est de 54,7%.

L'analyse du milieu réactionnel avant élimination de l'IPDI monomère est présentée dans le tableau ci après.

| Produit | Pourcentages pondéraux |
|---|---|
| IPDI | 55,3 |
| Carbamate d'IPDI et de 2 méthoxyéthanol | |
| Allophanate d'IPDI et de 2 méthoxyéthanol | 8,8 |
| Dimère d'IPDI | 13,8 |
| Trimère vrai d'IPDI | 13,2 |
| Bis trimère d'IPDI | 6,8 |
| Lourds dont tris trimère | 2,1 |
| Ratio tri vrai sur somme des trimères | 0,625 |
| Ratio tri vrai sur somme des trimère et dimère vrais | 1 |
| Ratio dimère vrai / trimère vrai | 1,04 |

On note la présence de fonctions allophanates et dimères sous le massifs des bis trimères et des lourds.

### Exemple 17:

### Polycondensation d'IPDI en présence de Tris (2 méthoxy éthylène glycolate) d'Yttrium et d'imidazole

On procède comme pour l'exemple 16 en remplaçant l'alcoolate de lanthane par celui de l'Yttrium.

Dans un réacteur tricol de 50ml on ajoute à température ambiante, sous courant d'azote, 20 g d'isophorone diisocyanate (IPDI) soit 0,09mole soit 0,18mole de NCO. La solution catalytique est ajouté au milieu réactionnel. Les quantités d'alcoolate d'yttrium et d'imidazole sont respectivement égales à 150mg et 32 mg, soit un ratio Métal /NCO de 2,6 10⁻³. La température du milieu réactionnel est portée à 60°C et la réaction laissée sous agitation pendant 5 heures puis est bloquée par addition d'acide para toluène sulfonique (200mg). Le taux de transformation de l'lPDl est de 41%.

L'analyse du milieu réactionnel avant élimination de l'lPDl monomère est présentée dans le tableau ci après .

| Produit | Pourcentages pondéraux |
|---|---|
| IPDI | 59 |
| Carbamate d'IPDI et de 2 méthoxyéthanol | 1,6 |
| Allophanate d'IPDI et de 2 méthoxyéthanol | 9,6 |
| Dimère d'IPDI | 15,2 |
| Trimère vrai d'IPDI | 8,4 |
| Bis trimère d'IPDI | 3,8 |
| Lourds dont tris trimère | 0,8 |
| Ratio tri vrai sur somme des trimères | 0,65 |
| Ratio tri vrai sur somme des trimère et dimère vrais | 0,3 |
| Ratio dimère vrai / trimère vrai | 1,81 |

On note la présence de fonctions allophanates et dimères sous les massifs des bis trimères et des lourds.

### Exemple 18:

### Polycondensation d'IPDI en présence de Tris (isopropylate ) d'Yttrium et d'imidazole

Dans un réacteur tricol de 50ml on ajoute à température ambiante, sous courant d'azote, 20 g d'isophorone diisocyanate (IPDI) soit 0,09 mole, soit 0,18 mole de NCO. On ajoute 200mg d'isopropylate d'yttrium (7,5 10⁻⁴ mole) et 51 mg d'imidazole, soit un ratio Métal /NCO de 4 10⁻³. La température du milieu réactionnel est portée à 60°C et la réaction laissée sous agitation pendant 5 heures puis est bloquée par addition d'acide para toluène sulfonique (150mg). Le titre NCO est de 0,552 et le taux de transformation de l'lPDl est de 77,3 %.

L'analyse du milieu réactionnel avant élimination de l'lPDl monomère est présentée dans le tableau ci après :

| Produit | Pourcentages pondéraux |
|---|---|
| IPDI | 23,6 |
| Carbamate d'IPDI et d'isopropyle | |
| Allophanate d'IPDI et d'isopropyle | 3,5 |
| Dimère d'IPDI | 20,9 |
| Trimère vrai d'IPDI | 22 |
| Bis trimère et trimère dimère d'IPDI et trimère allophanate | 10,3 |
| Lourds dont tris trimère | 0,8 |
| Ratio tri vrai sur somme des trimères | 0,66 |
| Ratio tri vrai sur somme des trimère et dimère vrais | 0,41 |
| Ratio dimère vrai / trimère vrai | 0,95 |

On note la présence de fonctions allophanates et dimères sous les massifs des bis trimères et des lourds.

### Exemple 19 :

### Polycondensation d'IPDI en présence de Tris (isopropylate) de néodyme

On procède comme pour l'exemple 18 en remplaçant l'alcoolate d'Yttrium par celui de néodyme.

Dans un réacteur tricol de 50ml on ajoute à température ambiante, sous courant d'azote, 20 g d'isophorone diisocyanate (IPDI) soit 0,09 mole soit 0,18mole de NCO. On ajoute au milieu réactionnel 1 % poids par rapport à l'lPDl de Tris isopropylate de néodynium soit 200 mg (soit 6,2 10⁻⁴ soit un rapport Métal / NCO de 3,510⁻³) et 42 mg d'imidazole. La température du milieu réactionnel est portée à 60°C et la réaction laissée sous agitation pendant 5 heures. On arrête la réaction par addition de 200 mg d'acide paratoluène sulfonique. L'analyse du milieu réactionnel avant distillation du monomère IPDI par chromatographie donne la composition suivante :

| Produit | Pourcentages pondéraux |
|---|---|
| IPDI | 39,4 |
| Carbamate d'IPDI et d'isopropyle | 0 |
| Allophanate d'IPDI et d'isopropyle | 1,2 |
| Dimère d'IPDI | 31,4 |
| Bis Dimère d'IPDI | 4,6 |
| Trimère vrai d'IPDI | 13 |
| Bis trimère d'IPDI | 4,8 |
| Lourds dont tris trimère | 4,2 |
| Ratio tri vrai sur somme des trimères | 0,59 |
| Ratio tri vrai sur somme des trimère et dimère vrais | 0,3 |
| Ratio dimère vrai / tri vrai | 2,4 |

On note la présence de fonctions allophanates sous le massifs des bis trimères et des lourds.

### Exemple 20 :

### Polycondensation d'IPDI en présence de Tris (isopropylate ) d'Yttrium et d'imidazole

Dans un réacteur tricol de 50ml on ajoute à température ambiante, sous courant d'azote, 20 g d'isophorone diisocyanate (IPDI) soit 0,09mole soit 0,18mole de NCO. On ajoute 200mg d'isopropylate d'yttrium (7,5 10⁻⁴ mole) et 51 mg d'imidazole, soit un ratio Métal /NCO de 4 10⁻³. La température du milieu réactionnel est portée à 60°C et la réaction laissée sous agitation pendant 5 heures puis est bloquée par addition d'acide para toluène sulfonique (150mg). Le titre NCO est de 0,552 et le taux de transformation de l'IPDI est de 77,3 %.

L'analyse du milieu réactionnel avant élimination de l'IPDI monomère est présentée dans le tableau ci après :

| Produit | Pourcentages pondéraux |
|---|---|
| IPDI | 23,6 |
| Carbamate d'IPDI et d'isopropyle | |
| Allophanate d'IPDI et d'isopropyle | 3,5 |
| Dimère d'IPDI | 20,9 |
| Trimère vrai d'IPDI | 22 |
| Bis trimère et trimère dimère d'IPDI et trimère allophanate | 10,3 |
| Lourds dont tris trimère | 0,8 |
| Ratio tri vrai sur somme des trimères | 0,66 |
| Ratio tri vrai sur somme des trimère et dimère vrais | 0,41 |
| Ratio dimère vrai / trimère vrai | 0,95 |

On note la présence de fonctions allophanates et dimères sous les massifs des bis trimères et des lourds.

### Exemple 21 :

### Polycondensation d'IPDI en présence de Tris ( isopropylate ) d'Yttrium et de N-méthyl-imidazole

Dans un réacteur tricol de 50ml on ajoute à température ambiante, sous courant d'azote, 20 g d'isophorone diisocyanate (lPDl) soit 0,09mole soit 0,18mole de NCO. On ajoute 200mg d'isopropylate d'yttrium (7,5 10⁻⁴ mole) et 51 mg de N-méthyl imidazole, soit un ratio Métal /NCO de 4 10⁻³. La température du milieu réactionnel est portée à 60°C et la réaction laissée sous agitation pendant 5 heures puis est bloquée par addition d'acide para toluène sulfonique (150mg). On constate la présence de bandes dimères et trimères.

L'analyse du milieu réactionnel avant élimination de l'lPDl monomère est présentée dans le tableau ci après :

| Produit | Pourcentages pondéraux |
|---|---|
| IPDI | 50 |
| Carbamate d'IPDI et d'isopropyle | |
| Allophanate d'IPDI d'isopropyle et | 3 |
| Dimère d'IPDI | 5 |
| Trimère vrai d'IPDI | 23 |
| Bis trimère et trimère dimère d'IPDI et trimère allophanate | 12 |
| Lourds dont tris trimère | 7 |
| Ratio tri vrai sur somme des trimères | 0,55 |
| Ratio tri vrai sur somme des trimère et dimère vrais | 0,49 |
| Ratio dimère vrai / trimère vrai | 0,2 |

On note la présence de fonctions allophanates et dimères sous les massifs des bis trimères et des lourds.

## Revendications

1. Procédé de (cyclo)trimérisation d'isocyanates ayant au moins deux fonctions isocyanates, **caractérisé en ce que** :
a) l'on fait réagir des monomères isocyanates de départ ayant au moins deux fonctions isocyanates, éventuellement en présence d'autres monomères réactifs avec les monomères isocyanates ayant au moins deux fonctions isocyanates à une température d'au moins 20°C, avantageusement d'au moins 50°C, et inférieure à 200°C, avantageusement inférieure à 150°C en présence d'un composé comprenant au moins une fonction alcoolate de terres rares,
b) l'on arrête la réaction par inactivation du catalyseur ou de ses formes dérivées dans le milieu réactionnel à un taux de transformation d'au moins 2,5 % et d'au plus 90 % des fonctions isocyanates initiales ; et éventuellement
c) l'on distille le milieu réactionnel pour éliminer les monomères n'ayant pas réagi.

2. Procédé selon la revendication 1, **caractérisé en ce que** les monomères isocyanates de départ sont des diisocyanates.

3. Procédé selon la revendication 1 ou 2, **caractérisé en ce que** les monomères isocyanates de départ sont des diisocyanates à squelette hydrocarboné exclusivement de nature aliphatique, linéaire, ramifiés ou cycliques ou d'isocyanates aromatiques.

4. Procédé selon la revendication 3, **caractérisé en ce que** les diisocyanates possèdent au moins une fonction isocyanate en position cycloaliphatique, secondaire, tertiaire ou néopentylique.

5. Procédé selon la revendication 3, **caractérisé en ce qu'**au moins deux fonctions isocyanates sont distantes du cycle le plus proche d'au plus un carbone et, de préférence, sont reliées directement à lui.

6. Procédé selon la revendication 3, **caractérisé en ce que** les fonctions isocyanates sont portées par des atomes de carbone secondaires, tertiaires ou néopentyliques.

7. Procédé selon la revendication 6, **caractérisé en ce que** les isocyanates sont choisis parmi l'H₁₂MDI, les BIC , le NBDI et l'lPDl.

8. Procédé selon l'une quelconque des revendications 1 à 7, **caractérisé en ce que** le composé comportant une fonction alcoolate de terres rares est un alcoolate de terres rares.

9. Procédé selon la revendication 8, **caractérisé en ce que** l'alcoolate de terres rares est choisi parmi les alcoolates des éléments suivants: scandium, yttrium, lanthane, cerium, praséodyme, néodyme, samarium, europium, gadolinium, terbium, ytterbium et lutécium.

10. Procédé selon la revendication 8 ou la revendication 9, **caractérisé en ce que** l'alcoolate de terres rares est choisi parmi le méthylate, l'éthylate, le propylate, l'isopropylate et le butylate de terres rares.

11. Procédé selon la revendication 1, **caractérisé en ce que** le composé comportant une fonction alcoolate de terres rares comporte également un groupe polyalkénylèneoxyde, notamment polyéthylène oxyde ou polypropylèneoxyde.

12. Procédé selon l'une quelconque des revendications précédentes, **caractérisé en ce que** l'on ajoute le catalyseur en un rapport molaire alcoolate de terres rares/fonctions NCO compris entre 5.10⁻⁵ et 5.10⁻², de préférence entre 10⁻⁴ et 10⁻².

13. Procédé selon l'une quelconque des revendications précédentes, **caractérisé en ce que** l'on stoppe la réaction par addition d'un acide fort ou d'un peroxyde.

14. Procédé selon la revendication 13, **caractérisé en ce que** l'acide fort ou le peroxyde sont ajoutés en un rapport molaire fonctions acides fort (peroxydes)/fonctions base forte à alcoolate de métal compris entre 0,5 et 30, avantageusement 1 et 10.

15. Procédé selon l'une quelconque des revendications précédentes, **caractérisé en ce que** l'on arrête la réaction de condensation à un taux de transformation d'au moins 10 % et d'au plus 80 %, avantageusement au plus 50 %.

16. Procédé selon la revendication 1, **caractérisé en ce que** dans l'étape a), on ajoute un composé azoté consistant en un hétérocycle à cinq chaînons, possédant au moins deux atomes d'azote.

17. Procédé selon la revendication 16, **caractérisé en ce que** le rapport molaire composé azoté cyclique/composé comprenant au moins une fonction alcoolate de terres rares est compris entre 0,1 et 10, avantageusement entre 0,2 et 5.

18. Procédé selon la revendication 16, **caractérisé en ce que** le composé pentacyclique azoté comportant au moins deux atomes d'azote est choisi parmi l'imidazole, le triazole, le tétrazole et leurs dérivés comportant un ou plusieurs substituants.

19. Procédé selon la revendication 16, **caractérisé en ce que** le composé hétérocyclique azoté à cinq chaînons est l'imidazole ou un de ses dérivés comportant un ou plusieurs substituants.

## Patentansprüche

1. Verfahren zur (Cyclo)trimerisierung von Isocyanaten mit mindestens zwei Isocyanatgruppen,
**dadurch gekennzeichnet, dass**:
a) Isocyanatausgangsmonomere mit mindestens zwei Isocyanatgruppen gegebenenfalls im Beisein weiterer reaktionsfähiger Monomere mit den Isocyanatmonomeren mit mindestens zwei Isocyanatgruppen bei einer Temperatur von mindestens 20°C, vorteilhafter Weise mindestens 50°C, und unter 200°C, vorteilhafter Weise unter 150°C im Beisein einer Zusammensetzung zur Reaktion gebracht werden, die mindestens eine Seltenerd-Alkoholatgruppe umfasst,
b) die Reaktion durch Inaktivierung des Katalysators oder seiner Derivatformen im Reaktionsmedium mit einem Umwandlungsverhältnis von mindestens 2,5% und höchstens 90% der Isocyanatausgangsgruppen zum Stillstand gebracht wird; und gegebenenfalls
c) das Reaktionsmedium destilliert wird, um die Monomere abzusondern, die keine Reaktion eingegangen sind.

2. Verfahren nach Anspruch 1,
**dadurch gekennzeichnet, dass**
die Isocyanatausgangsmonomere Diisocyanate sind.

3. Verfahren nach Anspruch 1 oder 2,
**dadurch gekennzeichnet, dass**
die Isocyanatausgangsmonomere Diisocyanate mit einem Kohlenwasserstoffgerüst ausschließlich aliphatischer, linearer Beschaffenheit, verzweigte oder zyklische, oder aromatische Isocyanate sind.

4. Verfahren nach Anspruch 3,
**dadurch gekennzeichnet, dass**
die Diisocyanate mindestens eine Isocyanatgruppe an einer cycloaliphatischen, sekundären, tertiären oder Neopentyl-Stelle besitzen.

5. Verfahren nach Anspruch 3,
**dadurch gekennzeichnet, dass**
mindestens zwei Isocyanatgruppen vom nächstgelegenen Zyklus höchstens einen Kohlenstoff entfernt und vorzugsweise direkt mit ihm verbunden sind.

6. Verfahren nach Anspruch 3,
**dadurch gekennzeichnet, dass**
die Isocyanatgruppen an sekundären, tertiären oder Neopentyl-Kohlenstoffatomen gebunden sind.

7. Verfahren nach Anspruch 6,
**dadurch gekennzeichnet, dass**
die Isocyanate aus H₁₂MDI, BICs, NBDI und IPDI ausgewählt werden.

8. Verfahren nach einem der Ansprüche 1 bis 7,
**dadurch gekennzeichnet, dass**
die Zusammensetzung, die eine Seltenerd-Alkoholatgruppe umfasst, ein Seltenerd-Alkoholat ist.

9. Verfahren nach Anspruch 8,
**dadurch gekennzeichnet, dass**
das Seltenerd-Alkoholat aus den Alkoholaten der folgenden Elemente ausgewählt wird: Scandium, Yttrium, Lanthan, Cer, Praseodym, Neodym, Samarium, Europium, Gadolinium, Terbium, Ytterbium und Lutetium.

10. Verfahren nach Anspruch 8 oder 9,
**dadurch gekennzeichnet, dass**
das Seltenerd-Alkoholat aus Methylat, Ethylat, Propylat, Isopropylat und Butylat von Seltenerd-Elementen ausgewählt wird.

11. Verfahren nach Anspruch 1,
**dadurch gekennzeichnet, dass**
die Zusammensetzung, die eine Seltenerd-Alkoholatgruppe umfasst, auch eine Polyalkenylenoxidgruppe, insbesondere eine Polyethylenoxid- oder Polyproylenoxidgruppe umfasst.

12. Verfahren nach einem der vorhergehenden Ansprüche,
**dadurch gekennzeichnet, dass**
der Katalysator in einem Molverhältnis von Seltenerd-Alkoholat/NCO-Gruppen zugefügt wird, das zwischen 5.10⁻⁵ und 5.10⁻², vorzugsweise zwischen 10⁻⁴ und 10⁻² liegt.

13. Verfahren nach einem der vorhergehenden Ansprüche,
**dadurch gekennzeichnet, dass**
die Reaktion durch Zugabe einer starken Säure oder eines Peroxids zum Stillstand gebracht wird.

14. Verfahren nach Anspruch 13,
**dadurch gekennzeichnet, dass**
die starke Säure oder das Peroxid in einem Molverhältnis von starken Säuren (Peroxide)/stark basischen Metallalkoholaten im Bereich zwischen 0,5 und 30, vorteilhafter 1 und 10 liegt.

15. Verfahren nach einem der vorhergehenden Ansprüche,
**dadurch gekennzeichnet, dass**
die Kondensationsreaktion bei einem Umwandlungsverhältnis von mindestens 10% und höchstens 80%, vorteilhafter Weise höchstens 50% zum Stillstand gebracht wird.

16. Verfahren nach Anspruch 1,
**dadurch gekennzeichnet, dass**
im Schritt a) eine stickstoffhaltige Verbindung zugegeben wird, die aus einem fünfkettigen Heterocyclus besteht, der mindestens zwei Stickstoffatome aufweist.

17. Verfahren nach Anspruch 16,
**dadurch gekennzeichnet, dass**
das Molverhältnis von stickstoffhaltiger Cycloverbindung/mindestens eine Seltenerd-Alkoholatgruppe umfassenden Verbindung im Bereich zwischen 0,1 und 10, vorteilhafter Weise zwischen 0,2 und 5 liegt.

18. Verfahren nach Anspruch 16,
**dadurch gekennzeichnet, dass**
die stickstoffhaltige pentacyclische Verbindung, die mindestens zwei Stickstoffatome umfasst, aus Imidazol, Triazol, Tetrazol und ihren Derivaten ausgewählt wird, die einen oder mehrere Substituenten umfassen.

19. Verfahren nach Anspruch 16,
**dadurch gekennzeichnet, dass**
die fünfkettige stickstoffhaltige heterocyclische Verbindung Imidazol oder eines seiner Derivate ist, das einen oder mehrere Substituenten umfasst.

## Claims

1. Method for the (cyclo)trimerisation of isocyanates having at least two isocyanate functions, **characterized in that**:
a) reacting initial isocyanate monomers having at least two isocyanate functions, optionally in the presence of other monomers reactive with the isocyanate monomers having at least two isocyanate functions, at a temperature of at least 20°C, advantageously, of at least 50°C, and lower than 200°C, advantageously lower than 150°C, in the presence of a compound comprising at least one rare earth alcoholate function,
b) stopping the reaction by inactivating the catalyst or its derivative forms in the reaction medium at a transformation rate of at least 2.5% and at most 90% of the initial isocyanate functions; and optionally
c) distilling the reaction medium to eliminate the unreacted monomers.

2. Method according to Claim 1, **characterized in that** the initial isocyanate monomers are diisocyanates.

3. Method according to Claim 1 or 2, **characterized in that** the initial isocyanate monomers are diisocyanates with a hydrocarbon skeleton exclusively of a nature which is aliphatic, straight-chain, branched or cyclic, or aromatic isocyanates.

4. Method according to Claim 3, **characterized in that** the diisocyanates have at least one isocyanate function in a cycloaliphatic, secondary, tertiary or neopentylic position.

5. Method according to Claim 3, **characterized in that** at least two isocyanate functions are spaced from the ring which is closest by at most one carbon and, preferably, are directly connected to it.

6. Method according to Claim 3, **characterized in that** the isocyanate functions are carried by secondary, tertiary or neopentylic carbon atoms.

7. Method according to Claim 6, **characterized in that** the isocyanates are selected from H₁₂MDI, BIC, NBDI and IPDI.

8. Method according to any one of Claims 1 to 7, **characterized in that** the compound comprising a rare earth alcoholate function is a rare earth alcoholate.

9. Method according to Claim 8, **characterized in that** the rare earth alcoholate is selected from the group consisting of alcoholates of the following elements: scandium, yttrium, lanthanum, cerium, praseodymium, neodymium, samarium, europium, gadolinium, terbium, ytterbium and lutetium.

10. Method according to Claim 8 or Claim 9, **characterized in that** the rare earth alcoholate is selected from methylate, ethylate, propylate, isopropylate and butylate of rare earths.

11. Method according to Claim 1, **characterized in that** the compound comprising a rare earth alcoholate function also comprises a polyalkenylene oxide group in particular polyethylene oxide or polypropylene oxide.

12. Method according to any one of the preceding claims, **characterized in that** the catalyst is added in a molar ratio of rare earth alcoholate/NCO functions of between 5.10⁻⁵ and 5.10⁻², preferably between 10⁻⁴ and 10⁻².

13. Method according to any one of the preceding claims, **characterized in that** the reaction is stopped by the addition of a strong acid or a peroxide.

14. Method according to Claim 13, **characterized in that** the strong acid or the peroxide are added in a molar ratio of strong acid (peroxide) functions/strong base functions with a metal alcoholate of between 0.5 and 30, advantageously 1 and 10.

15. Method according to any one of the preceding claims, **characterized in that** the condensation reaction is stopped at a transformation rate of at least 10% and of at most 80%, advantageously at most 50%.

16. Method according to Claim 1, **characterized in that** in step a) a nitrogenous compound is added comprising a heterocycle with five members, having at least two nitrogen atoms.

17. Method according to Claim 16, **characterized in that** the molar ratio of cyclic nitrogenous compound/compound comprising at least one rare earth alcoholate function is between 0.1 and 10, advantageously between 0.2 and 5.

18. Method according to Claim 16, **characterized in that** the nitrogenous pentacyclic compound comprising at least two nitrogen atoms is selected from the group consisting of imidazole, triazole, tetrazole and their derivatives comprising one or more substituents.

19. Method according to Claim 16, **characterized in that** the nitrogenous heterocyclic compound with five members is imidazole or one of its derivatives comprising one or more substituents.
